# EUROPEAN PATENT APPLICATION

(11) **EP 2 050 378 A2**
(43) Date of publication of application: **22.04.2009**
(21) Application number: 08160522.2
(22) Date of filing: 16.07.2008
(51) Int. Cl.: A47L 7/00

(54) **Water container and steam cleaner having the same**

(30) Priority: 19.10.2007 KR 20070105539
(71) Applicant: Samsung Gwangju Electronics Co., Ltd., Gwangju-city (KR)
(72) Inventor: Oh, Jang-keun, Gwangju-city (KR); Cha, Seung-yong, Gwangju-city (KR)
(74) Representative: Domenego, Bertrand

(57) **Abstract**

A water container (100) that is detachably mounted in a steam cleaner body. The water container includes a water container body (100) with a water inlet (101) on the bottom thereof, whereby the water container body can be filled with water and the water can be discharged from the water container body through the water inlet (101), and an ion exchange unit (120) formed in the water container body to remove hardness components included in water when the water container is filled with water and when water is discharged from the water container.

## Description

### CROSS-REFERENCE TO RELATED APPLICATIONS

This application claims the benefit under 35 U.S.C. § 119 of Korean Patent Application No. 10-2007-0105539, filed on October 19, 2007, in the Korean Intellectual Property Office, the disclosure of which is incorporated herein by reference in its entirety.

### FIELD OF THE INVENTION

The present invention relates to providing a vacuum cleaner or steam cleaner that enables steam cleaning using a water container that includes an ion exchange unit.

### BACKGROUND OF THE INVENTION

Steam cleaners inject steam to efficiently remove dust and stains on cleaning surfaces. Steam cleaners having a vacuum cleaning function have been produced. Steam cleaners generally use tap water to generate steam. However, some countries have low quality tap water including hardness components such as calcium (Ca2+) and magnesium (Mg2+) ions, which may form a coating of scale deposits. If such tap water is stored in a water container for a long time, chemical compounds such as calcium carbonate (CaCO₃) are deposited on the inside surface of the water container or on the surface of a heater.

If such scaling inside the water container becomes serious, a bad smell is generated from the water. Accordingly, in spite of steam cleaning, a cleaned surface may generate a bad smell. In addition, if the scale deposits are attached to the metal heater, the heater may become corroded and the deposits may insulate heat from the heater so as to cause the thermal efficiency of the heater to be lowered. The hardness components may also generate scale deposits around the steam-injecting nozzle such that the nozzle becomes clogged.

### SUMMARY OF THE INVENTION

Accordingly, to solve at least the above problems and/or disadvantages and to provide at least the advantages described below, a non-limiting object of the present invention is to provide a water container including a water container body with a water inlet on the bottom thereof, whereby the water container body can be filled with water and the water can be discharged from the water container body through the water inlet, and an ion exchange unit formed in the water container body to remove hardness components included in water when the water container is filled with water and when water is discharged from the water container. The ion exchange unit may include a frame formed in contact with the bottom surface of the water container, a first portion of which is in fluid communication with the water inlet and a second portion of which is in fluid communication with a storage space inside the water container, and an ion exchange resin formed inside the frame to remove the hardness components in water that passes through the ion exchange resin. The frame may include at least one first passing hole in fluid communication with the water inlet, the first passing hole supplying water coming in through the water inlet to the ion exchange resin when the water container is filled with water and discharging water from which the hardness components have been removed by the ion exchange resin from the ion exchange resin when water is discharged from the water container through the water inlet, and at least one second passing hole in fluid communication with the storage space inside the water container, the second passing hole supplying water from which the hardness components have been removed by the ion exchange resin to the water container when the water container is filled with water and supplying water in the water container to the ion exchange resin when water is discharged from the storage space.

A first filter and a second filter may be formed in the first passing hole and the second passing hole, respectively, to filter contaminants from the water. The first passing hole and the second passing hole may be formed not to face each other, for example substantially at right angles to each other. The water inlet may be sealed with a cover, the cover comprising a valve unit that is selectively opened and closed according to whether or not the water container is mounted in the steam cleaner.

### BRIEF DESCRIPTION OF THE DRAWINGS

The above and other aspects of the present invention will be more apparent from the following detailed description of exemplary embodiments with reference to the accompanying drawings, in which:
FIG. 1 is a perspective view illustrating a water container of a steam cleaner according to an exemplary embodiment of the present invention;
FIG. 2 is a side cross-sectional view illustrating the water container of FIG. 1;
FIG. 3 is a side cross-sectional view illustrating a process of softening water when the water container of the present invention is filled with water;
FIG. 4 is a side cross-sectional view illustrating a process of softening water when water is discharged from the water container of the present invention;
FIG. 5 is a perspective view of a steam cleaner according to an exemplary embodiment of the present invention.

### DETAILED DESCRIPTION OF EXEMPLARY EMBODIMENTS OF THE INVENTION

Reference will now be made in detail to non-limiting embodiments of the present invention by way of reference to the accompanying drawings, wherein like reference numerals refer to like parts, components and structures.

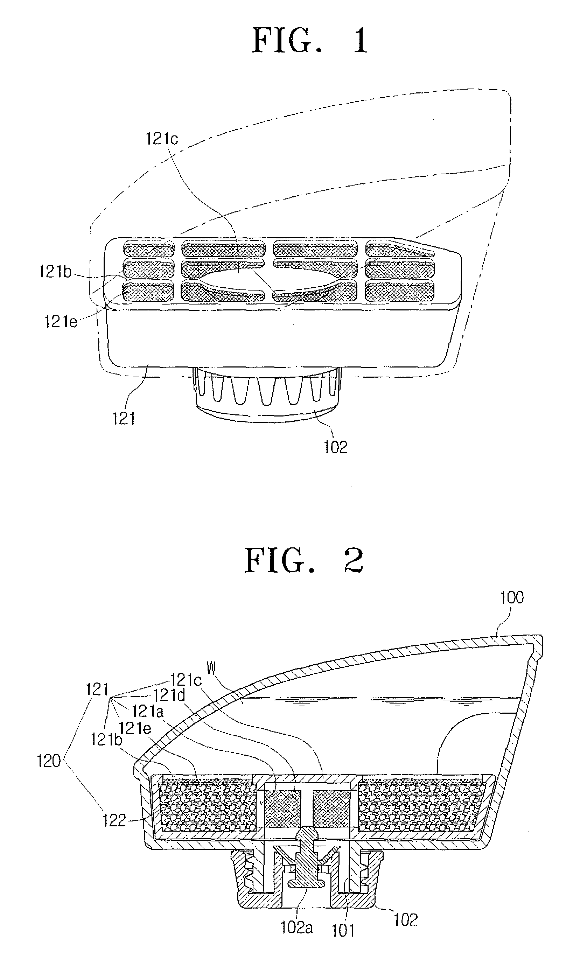

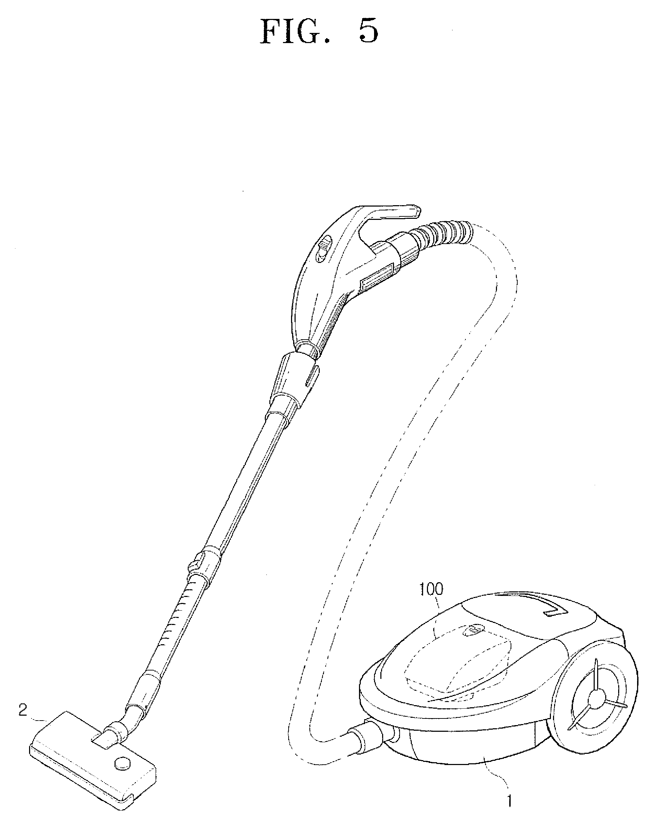

As shown in FIGS. 1 and 2, a water container of a steam cleaner according to an exemplary embodiment of the present invention includes a water container body 100 and an ion exchange unit 120. The water container body 100 is detachably mounted in a main body 1 (see FIG. 5) of a steam cleaner having a steam cleaning function or a general steam cleaner without a vacuum cleaning function. For ease of understanding, in the present example the water container is applied to a steam cleaner having a vacuum cleaning function.

A water inlet 101 is formed on the bottom surface of the water container body 100 to fill the water container body 100 with water or discharge water from the water container body 100. The water inlet 101 is sealed with a cover 102, and the cover 102 includes a valve unit 102a which opens and closes a water path according to whether or not the water container body 100 is mounted in the steam cleaner. The valve unit 102a opens the water path when the water container body 100 is mounted in the steam cleaner, and closes the water path when the water container body 100 is detached from the steam cleaner.

The ion exchange unit 120 is disposed inside the water container 100 to remove hardness components from water which enters or is discharged through the water inlet 101 and includes a frame 121 and an ion exchange resin 122. The bottom surface of the frame 121 is in contact with the inside bottom surface of the water container 100 so that the frame 121 can always be submerged in water W in use in the steam cleaner. A first portion of the frame 121 is formed to be in fluid communication with the water inlet 101 and a second portion of the frame 121 is formed to be in fluid communication with a storage space of the water container body 100. Accordingly, a first passing hole 121 a is formed on the first portion of the frame 121 and a second passing hole 121 b is formed on the second portion of the frame 121. The first passing hole 121 a is in fluid communication with the water inlet 101 so water coming in through the water inlet 101 is supplied to the ion exchange resin 122 when the water container is filled with water. Accordingly, water from which hardness components are removed by the ion exchange resin 122 is discharged through the water inlet 101. The first passing hole 121 a may be formed as a single hole or as a plurality of first passing holes 121 a formed at regular intervals. The second passing hole 121 b is in fluid communication with the storage space of the water container body 100 so water ionized by the ion exchange resin 122 is supplied to the storage space of the water container body 100 when the water container is filled with water. Accordingly, water in the storage space of the water container body 100 is supplied to the ion exchange resin 122 through the second passing hole 121 b when water is discharged. According to an exemplary embodiment of the present invention, as shown in FIGS. 1 and 2, the second passing hole 121 b may be formed on the upper surface of the frame 121, and the first passing hole 121 a may be formed at right angles to the second passing hole 121 a so that the first passing hole 121 a does not face the second passing hole 121b. More preferably, as shown in FIG. 2, the first portion of the frame 121 having the first passing hole 121 a forms a communication space having a diameter corresponding to the diameter of the water inlet 101, and the first passing hole 121 a is formed on the circumferential surface of the communication space.

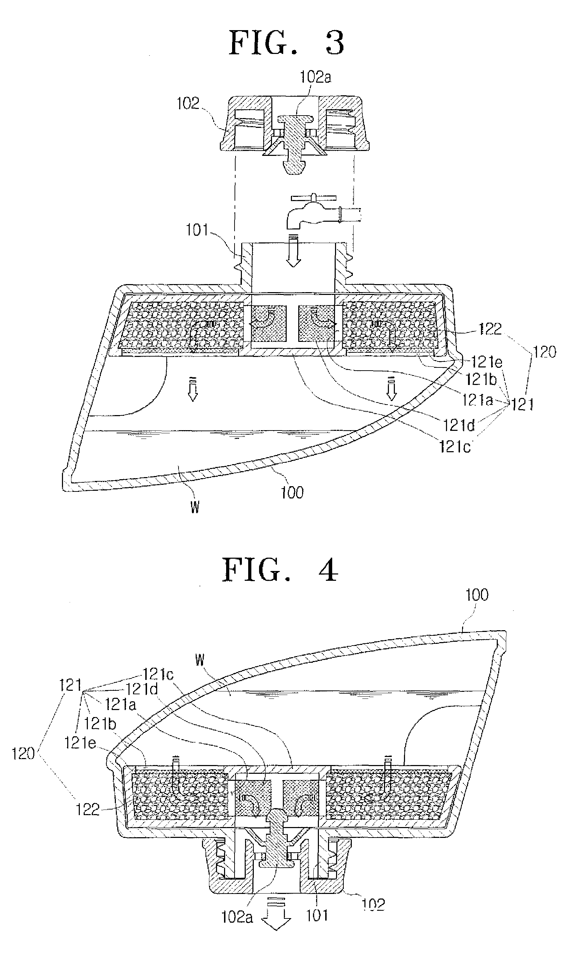

The second passing hole 121 b may not be formed on a blocking part 121 c of the upper surface of the frame 121 corresponding to the water inlet 101 so that the blocking part 121c of the upper surface of the frame 121 can be blocked off. According to such a configuration, water flows in and out of the ion exchange resin 122 along an L-shaped path through the first passing hole 121 a and the second passing hole 121 b as shown in FIG. 4 so water can remain in the ion exchange resin 122 for a longer period of time.

The ion exchange resin 122 is disposed under the frame 121 on the bottom surface of the water container body 100. Accordingly, since the ion exchange resin 122 is always submerged in the water W in the water container body 100 when the steam cleaner is used, water to be discharged through the water inlet 101 can remain in the ion exchange resin 122 for a longer time. The ion exchange resin 122 may be formed of a plurality of sodium-type positive ion (Na⁺) exchange resins to react to hardness components in water, such as Ca²⁺ and Mg²⁺ ions. The ion exchange resin 122 may have a granulated form to maximize contact with water.

A first filter 121 d may be disposed between the first passing hole 121 a of the frame 121 and the water inlet 101 so larger particle contaminants in the water may be filtered. A second filter 121e may be disposed between the second passing hole 121 b of the frame 121 and the ion exchange resin to further filter water transmitted to and discharged from the storage space of the water container body 100. The first filter 121d and the second filter 121e may be provided to further prevent the generation of scale deposits inside surface of the water container body 100 or on the surface of a heater.

The operation of the water container and the steam cleaner having the same is described below with reference to FIGS. 3 to 5.

The user separates the water container body 100 from the steam cleaner 1 as shown in FIG. 5 to fill the water container body 100 with tap water, as is generally used. Subsequently, the user removes the cover 102 from the water inlet on the bottom surface of the water container body 100 and fills the water container body 100 with water through the open water inlet 101. Water may include hardness components which cause scale deposits to form.

As shown in FIG. 3, water is supplied to the ion exchange resin 122 through a first filter 121 d and the first passing hole 121 a of the frame 121 so larger particle contaminants in the water are filtered by the first filter 121d. The ion exchange resin 122 removes the hardness components from the water by performing chemical reactions and transmits the water to the storage space of the water container body 100 through a second filter 121e and the second passing hole 121 b. The chemical reaction is expressed by the following chemical equation:

2(RSO₃NA) + Ca² ↔ (RSO₃)2Ca + 2Na⁺ (Absorption reaction)

wherein R represents the ion exchange resin. Accordingly, the hardness components (Ca²⁺ and Mg²⁺ ions) in the water react to the sodium ions (Na⁺) and are absorbed by the surface of the ion exchange resin 122. Thereby, the hardness components are removed from the water and the water is softened.

When the water container body 100 is sufficiently filled with water, the user places the water container body 100 into the main body 1 of the steam cleaner. FIG. 4 illustrates the state of the water container body 100 while in the steam cleaner. The ion exchange resin 122 and the water inlet 101 are disposed on the bottom surface of the water container body 100. The valve unit 102a formed on the cover 102 is connected to a water path leading to a heater (not shown) in the main body 1 of the steam cleaner.

When the steam cleaner starts cleaning, the water W in the water container body 100 flows into the ion exchange resin 122 through the second filter 121e and the second passing hole 121 b and is softened again by the chemical reaction of the ion exchange resin 122 in the same manner as when the water container body 100 is filled with water W. The water W passes the first passing hole 121 a and the first filter 121 d and is supplied to the heater through the water inlet 101 to generate steam. Because the ion exchange resin 122 and the water inlet 101 are located on the bottom surface of the water container body 100, the water W in the water container body 100 is held in the ion exchange resin 122 to be discharged. Accordingly, the water W in the storage space of the water container body 100 can be ionized in the ion exchange resin 122 for a longer time such that the efficiency of softening increases when the water is discharged to the heater.

As shown in FIG. 5, the steam cleaner according to an exemplary embodiment of the present invention includes the main body 1 in which is embedded the water container body 100 has the above-described configuration, and includes a brush 2 having a nozzle for steaming. The steam cleaner may or may not have a vacuum cleaning function as required. The configuration and operation for steam cleaning and vacuum cleaning are not relevant to the main inventive concept of the present invention, so detailed description is omitted here.

Because water is softened by the ion exchange resin 122 at least twice, i.e., when the water container body 100 is filled with water and when water is discharged, scale deposits can be prevented from forming inside the water container and on the surface of the heater. This also helps prevent malfunctioning of the steam cleaner caused by the scale deposits.

While certain exemplary embodiments of the present invention have been shown and described with reference to certain preferred embodiments thereof, it will be understood by those skilled in the art that various changes in form and details may be made therein without departing from the spirit and scope of the invention as defined by the appended claims and their equivalents.

## Claims

1. A water container comprising:
a water container body that includes a water inlet on the bottom thereof, whereby the water container body can be filled with water and the water can be discharged from the water container body through the water inlet; and
an ion exchange unit formed in the water container body to remove hardness components included in water when the water container is filled with water and when water is discharged from the water container.

2. The water container of Claim 1, wherein the ion exchange unit comprises:
a frame formed in contact with the bottom surface of the water container, a first portion of which is in fluid communication with the water inlet and a second portion of which is in fluid communication with a storage space inside the water container; and
an ion exchange resin formed inside the frame to remove the hardness components in water that passes through the ion exchange resin.

3. The water container of Claim 2, wherein the frame comprises:
at least one first passing hole in fluid communication with the water inlet, the first passing hole supplying water coming in through the water inlet to the ion exchange resin when the water container is filled with water and discharging water from which the hardness components have been removed by the ion exchange resin from the ion exchange resin when water is discharged from the water container through the water inlet ; and
at least one second passing hole in fluid communication with the storage space inside the water container, the second passing hole supplying water from which the hardness components have been removed by the ion exchange resin to the water container when the water container is filled with water and supplying water in the water container to the ion exchange resin when water is discharged from the storage space.

4. The water container of Claim 3, wherein a first filter and a second filter are formed in the first passing hole and the second passing hole, respectively, to filter contaminants from the water.

5. The water container of any of Claims 3 and 4, wherein the first passing hole and the second passing hole are formed not to face each other.

6. The water container of any of Claims 3 to 5, wherein the first passing hole and the second passing hole are formed substantially at right angles to each other.

7. The water container of any of claims 1 to 6, wherein the water inlet is sealed with a cover, the cover comprising a valve unit that is selectively opened and closed according to whether or not the water container is mounted in a steam cleaner.

8. A steam cleaner comprising:
a steam cleaner body;
a water container body detachably mounted in the steam cleaner body and including a water inlet on the bottom thereof, whereby the water container body can be filled with water and water can be discharged from the water container body through the water inlet; and
an ion exchange unit formed in the water container body to remove hardness components included in water when the water container is filled with water or when water is discharged from the water container.

9. The steam cleaner of Claim 8, wherein the ion exchange unit comprises:
a frame formed in contact with the bottom surface of the water container so that the ion exchange unit is submerged in water when there is water in the water container body, a first portion of which is in fluid communication with the water inlet and a second portion of which is in fluid communication with a storage space inside the water container; and
an ion exchange resin formed inside the frame to remove the hardness components from water that passes through the ion exchange resin.

10. The steam cleaner of Claim 9, wherein the frame comprises:
at least one first passing hole in fluid communication with the water inlet, the first passing hole supplying water coming in through the water inlet to the ion exchange resin when the water container is filled with water and discharging water from which the hardness components have been removed by the ion exchange resin from the ion exchange resin when water is discharged from the water container through the water inlet; and
at least one second passing hole in fluid communication with the storage space inside the water container, the second passing hole supplying water from which the hardness components have been removed by the ion exchange resin to the water container when the water container is filled with water and supplying water in the water container to the ion exchange resin when water is discharged from the storage space.

11. The steam cleaner of Claim 10, wherein a first filter and a second filter are formed in the first passing hole and the second passing hole, respectively, to filter contaminants from the water.

12. The steam cleaner of any of Claims 10 and 11, wherein the first passing hole and the second passing hole are formed not to face each other.

13. The steam cleaner of any of Claims 10 to 12, wherein the first passing hole and the second passing hole are formed substantially at right angles to each other.

14. The steam cleaner of any of Claims 8 to 13, wherein the water inlet is sealed with a cover, the cover comprising a valve unit that opens a water path when the water container is mounted in the steam cleaner body and closes the water path when the water container is separated from the steam cleaner body.
